# NEW EUROPEAN PATENT SPECIFICATION

(11) **EP 0 378 314 B2**
(45) Date of publication and mention of the opposition decision: **14.04.1999**
(45) Mention of the grant of the patent: 13.04.1994
(21) Application number: 90300110.5
(22) Date of filing: 04.01.1990
(51) Int. Cl.: B60R 21/20, B62D 25/08, B60R 21/045

(54) **Air bag mount structure for vehicle**
Luftsackaufbauanordnung für Kraftfahrzeuge
Structure de montage d'air-bag pour véhicule

(30) Priority: 09.01.1989 JP 3298/89; 23.01.1989 JP 13373/89; 19.09.1989 JP 244635/89
(43) Date of publication of application: 18.07.1990
(73) Proprietor: Mazda Motor Corporation, Aki-gun Hiroshima-ken (JP)
(72) Inventor: Iriyama, Toru, Aki-gun Hiroshima-ken (JP); Iwamoto, Yasunori, Hiroshima-shi Hiroshima-ken (JP); Kimura, Shigeru, Aki-gun Hiroshima-ken (JP); Hirashima, Isao, Aki-gun Hiroshima-ken (JP); Shibata, Keiichirou, Higashihiroshima-shi Hiroshima-ken (JP)
(74) Representative: Jackson, Peter Arthur

(56) References cited:
- EP-A- 0 357 225
- DE-A- 2 324 571
- DE-A- 3 419 002
- DE-A- 3 611 486
- DE-A- 3 623 414
- US-A- 4 191 392
- US-A- 4 362 319
- US-A- 4 682 788
- US-A- 4 826 234
- ATZ-98 (1996)3, S.256ff
- ATZ-99 (1997)5, S.124ff

## Description

The present invention relates to an air bag unit for an automotive vehicle for protecting a passenger in a seat in case of collision of the vehicle, more particularly to an air bag mount structure for mounting the air bag unit on the vehicle.

Conventionally, there has been known an air bag mount structure as shown in Japanese Utility Model Public Disclosure No. 63-15257, laid open to the public on February 1, 1988.

According to the air bag mount structure disclosed in the above Japanese application, an air bag unit is carried by a dash upper panel and a glove box mounting bracket extending downwardly from a lower end of the dash upper panel through stays to be placed in a space above the glove box.

Japanese Patent Public disclosure No. 62-198547, laid open to the public on September 2, 1987, discloses a similar air bag mount structure.

U.S-A-3,774,713 and US-A-4,353,588 disclose shock absorbing member mount structures respectively.

It should however be noted that the conventional air bag mount structure as disclosed in the Japanese Utility Model Public Disclosure No. 63-15257 is disadvantageous in the following point.

The dash upper panel, specifically a rear portion thereof as a structure tends to be readily deformed rearwardly in case of a collision of the vehicle. This makes the mount structure of the air bag unit unstable. Consequently, the air bag unit is not able to protect the passenger effectively as a result that the air bag unit is displaced unduly at the time of collision.

It is therefore an object of the present invention to provide an air bag mount structure which can provide a stable support for an air bag to exert a desirable shock absorbing effect.

It is further object of the present invention to provide an air bag mount structure which can prevent an air bag unit from moving undesirably in case of a collision of the vehicle.

It is still another object of the present invention to provide an air bag mount structure which can be easily removed for inspection and the like.

GB-1375815 discloses an air bag mount structure for mounting an air bag unit according to the preamble of claim 1 having an air bag, an igniter and an inflator and which is disposed behind an instrument panel for absorbing a shock against a passenger seated in a front seat of a vehicle, the structure comprising a hinge pillar arranged in a front body structure of the vehicle on opposite sides of the front body structure for supporting a respective door unit through a hinge device, a support extending in a transverse direction of the vehicle, connected at each end to a respective hinge pillar, and for mounting the air bag thereon.

According to the present invention, such a structure is characterised in that the airbag is mounted on the support so that the airbag unit is not fixed with respect to either a dash panel or a cowl panel; and by a reinforcement structure connected to a floor panel at one end and which supports the support at its other end.

The support means may be of a pipe configuration.

Preferably, a knee protector is carried by the support means through a U-shaped bracket at end portions thereof.

The air bag unit may be disposed in a space defined by an instrument panel and above a hypothetical locus of the knee protector in case of collision. The air bag unit and the knee protector may be arranged side by side in the up and down direction.

The air bag mount structure is preferably further provided with mount case for receiving the air bag unit therein. The case may be secured to the support means at a lower portion of the bottom thereof. In this case, the air bag unit is positioned slightly upwardly so that an air bag is oriented to be inflated toward the upper portion of the passenger.

An auxiliary support member of a pipe like configuration may be disposed downward and in parallel with the support. The auxiliary member may be supported by the hinge pillar at one end and by an extension formed on the reinforcement structure at the other end. For carrying the air bag unit, the case may be joined with the support at an upper portion of the external bottom surface and with the auxiliary member at a lower portion of a lower surface of the mount case.

The support may be constituted by a plurality of members for supporting the external upper portion of the bottom of the mount case.

The auxiliary member may be constituted by a plurality of members for supporting an external lower portion or the mount case.

The air bag mount structure may be further provided with a pair of brackets welded onto the support means in a transversely spaced relationship with each other for mounting the air bag unit thereon. The bracket may be provided with an engaging surface on which the mount case is mounted.

In one embodiment, the air bag mount structure is provided with a lower bracket with a round flange which is connected with the support means and an upper bracket with a flat flange for mounting the air bag unit.

In the accompanying drawings:
Figure 1 is a partially sectional view showing inside of a passenger compartment of a vehicle to which the present invention can be applied;
Figure 2 is a sectional view showing a front body structure of the vehicle to which an air bag mount structure in accordance with present invention is incorporated:
Figure 3 is a perspective view of an air bag mount structure in accordance with a preferred embodiment of the present invention;
Figure 4 is a perspective view similar to Figure 3 but showing another embodiment;
Figure 5 is a sectional view of the air bag mount structure of Figure 4;
Figure 6 is a sectional view of an air bag mount structure similar to Figure 5 but showing another modification;
Figure 7 is a sectional view similar to Figure 6 but showing further modification;
Figure 8 is a sectional view similar to Figure 7 but showing still further modification;
Figure 9 is a perspective view showing an air bag mount structure of a still another embodiment of the present invention;
Figure 10 is a side view of the air bag mount structure of Figure 9: and
Figure 11 is a plan view of the air bag mount structure of Figure 9:
Figure 12 is a perspective view of a bracket employed in the embodiment of Figure 9;
Figures 13 is a side view of a further embodiment of an air bag mount structure of the present invention.

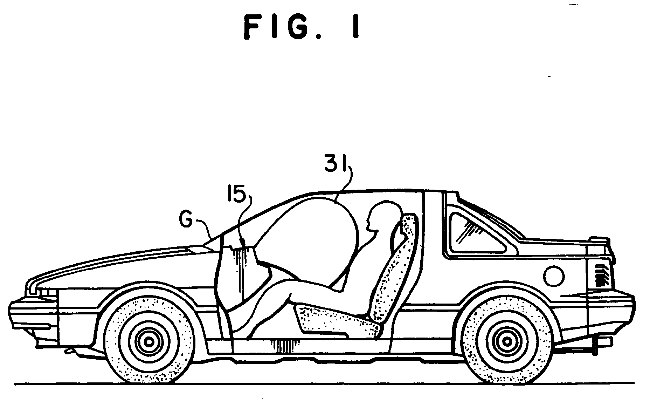

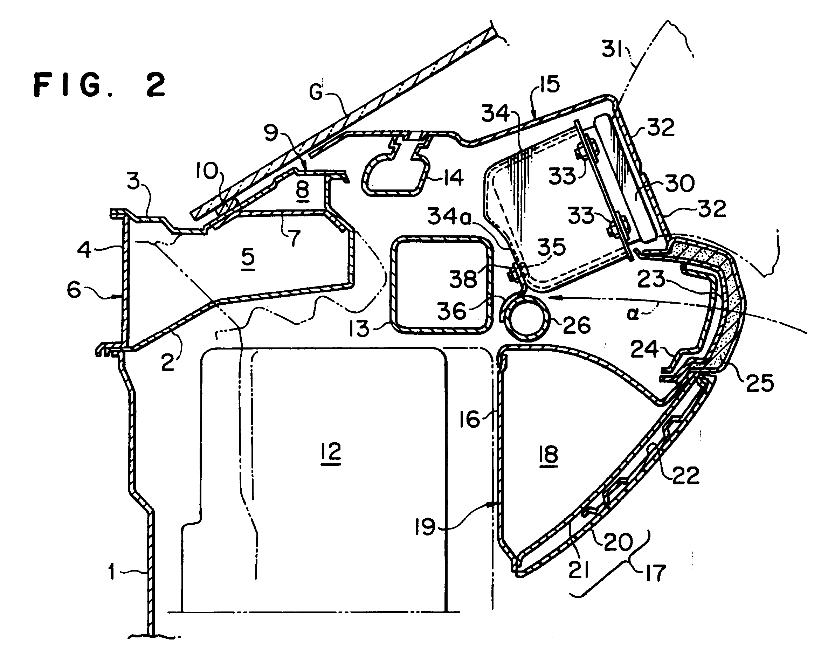

Referring to the drawings, specifically to Figures 1 through 3, there is shown an air bag mount structure in accordance with a preferred embodiment of the present invention. As shown in Figure 2, a front body structure of a vehicle is provided with a dash lower panel 1 arranged at a rear end portion of an engine room, a dash upper panel 2 connected with an upper end of the dash lower panel 1, a cowl upper panel 3 connected with an upper end of the dash upper panel 2 at a rear end, and a cowl front panel 4 connected with a front and lower end of the cowl upper panel 3 and a front and upper end of the dash upper panel 2 to thereby define a closed cross sectioned space 5 of a cowl box 6.

A reinforcement 7 extending horizontally and transversely in the vehicle is disposed between the cowl upper panel 3 and the dash upper panel 2 and connected thereto for forming a windshield glass support structure 9 having a closed cross sectioned space 8 defined by the three elements 2, 3 and 7. A front windshield glass G is carried by the support structure 9 formed on the cowl upper panel 3 in terms of an adhesive.

A cooling unit 12 is disposed rearward of the dash lower panel 1 and downward of the dash upper panel 2. A bent duct 13 is disposed near a rear and upper end portion of the cooling unit 12 for directing an air flow from the cooling unit 12 toward a driver and an assistant passenger through a bent door device. A demister duct 14 is mounted on a lower surface of a top deck of an instrument panel 15 for introducing the air flow from the cooling unit 12 toward the windshield glass for demisting.

Rearward of the cooling unit 12 are disposed a glove box 19 having a glove tray 16, a glove lid 17 and a glove pocket 18. The glove lid 17 is provided with a glove lid outer panel 20 and glove lid inner panel 21. A first knee protector 22 is mounted on an inner surface of the glove lid outer panel 20. An instrument panel core 23 is disposed above the glove lid 17. An arcuate second knee protector 24 is arranged behind the instrument panel core 23. A trim member 25 is arranged on the instrument panel core 23.

The second knee protector 24 is carried by a steering support member 26 of a pipe like configuration through a U-shaped bracket (not shown) at end portions thereof.

The steering support member 26 extends in a transverse direction of the vehicle and is connected with a hinge pillar 11 through brackets 27, 27 at opposite ends. The hinge pillar 11 is provided for supporting a door unit through a hinge device. The steering support member 26 is supported at an intermediate portion by a pair of reinforcements 29, 29 which is mounted on a tunnel structure 28 formed on a floor panel.

An air bag unit 30 is disposed in a space defined by the instrument panel 15 and above a hypothetical locus α of the knee protector 24 in case of collision. Thus, the airbag unit 30 and the knee protector 24 are arranged side by side in the up and down direction.

The air bag unit 30 is provided with an igniter for firing an explosive in an inflator to produce a gas when a collision is detected through a collision sensor, an air bag 31 receiving the gas from the inflator to be inflated as shown in Figure 1, opening unit covers 32, 32 which are disposed behind the instrument panel 15 in parallel therewith. Thus, the inflated air bag 31 receives an upper portion of the passenger to lighten a collision shock.

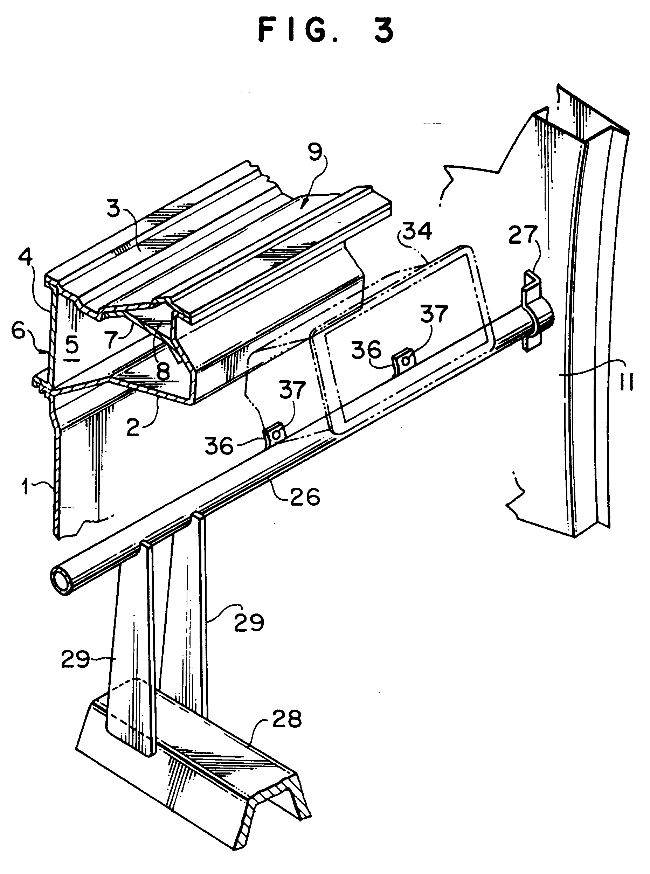

The air bag unit 30 is received and mounted to a mount case 34 through a bolt and nut device 33. As shown in Figure 3, the mount case 34 is of a box like configuration of a rectangular cross section. A plurality of stud bolts 35 are provided on an external surface of a bottom of the case 34 in the transverse direction of the vehicle.

A plurality of brackets 36 corresponding to the stud bolts 35 are mounted on the steering support member 26. Each of the brackets 36 is provided with an opening 37 through which the bracket 36 is engaged with the stud bolt 35 by means of a nut 38.

Thus, the case 34 is secured to the steering support member 26 at a lower portion of the bottom thereof. In this case, the air bag unit 30 is positioned slightly upwardly so that the air bag 31 is arranged to be inflated toward the upper portion of the passenger.

In operation, within about 20 m seconds from a detection of a collision, the inflator is actuated to cause the gas to be introduced into the air bag 31. The air bag 31 is inflated to open the unit covers 32. 32 and reaches a full developed condition as shown in Figure 1 within approximately 50 m seconds from the collision detection.

On the other hand, the dash lower panel 1 and a lower portion of the cash upper panel 2 are forced to be moved rearwardly as shown in Figure 2 by phantom line relative to the passenger and the knee protector 22 within approximately 40 m seconds. Then, the knee of the passenger is brought into contact with the knee protector 22 within approximately 50 m seconds from the collision.

It will be understood that the steering support member 26 is less influenced by the deformation of the lower and upper cash panels 1 and 2 at the time of collision. This is partly because the steering support member 26 is mounted on the hinge pillar 11 and supported by the floor panel. The hinge pillar 11 is hardly influenced by a deformation of a front end portion of the vehicle by collision. In addition, the steering support member 26 is not directly engaged with the dash panel 1 and 2 and the cowl panels 3 and 4 which defines the cowl box 6. Therefore, the air bag unit 30 can be maintained at the original position as stable as possible in case of collision. Consequently, a desirable shock absorbing effect in terms of the air bag unit 30 can be obtained since the air bag unit 30 is mounted on the steering support member 26. The air bag 31 is withered afterwards.

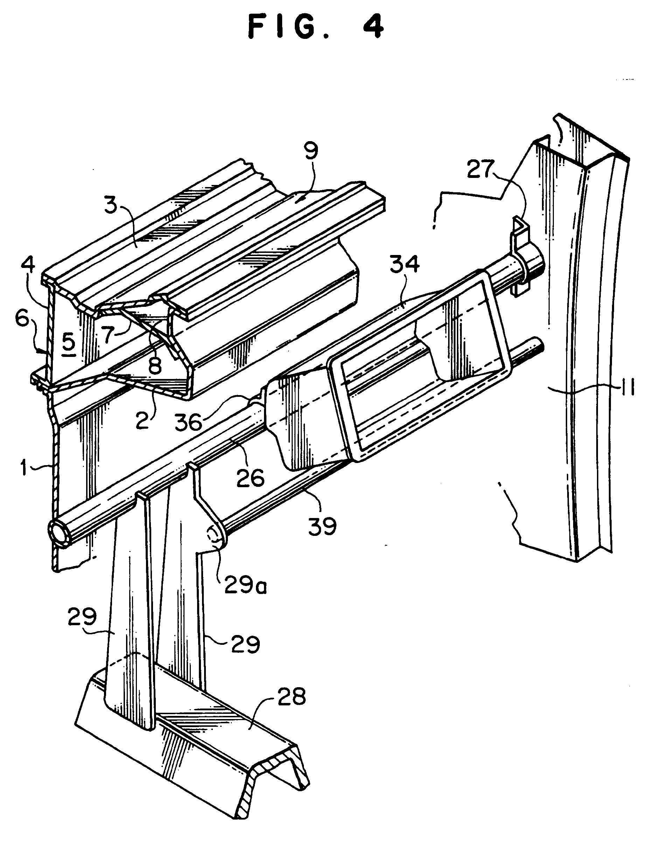

Referring to Figure 4, there is shown another embodiment of the present invention.

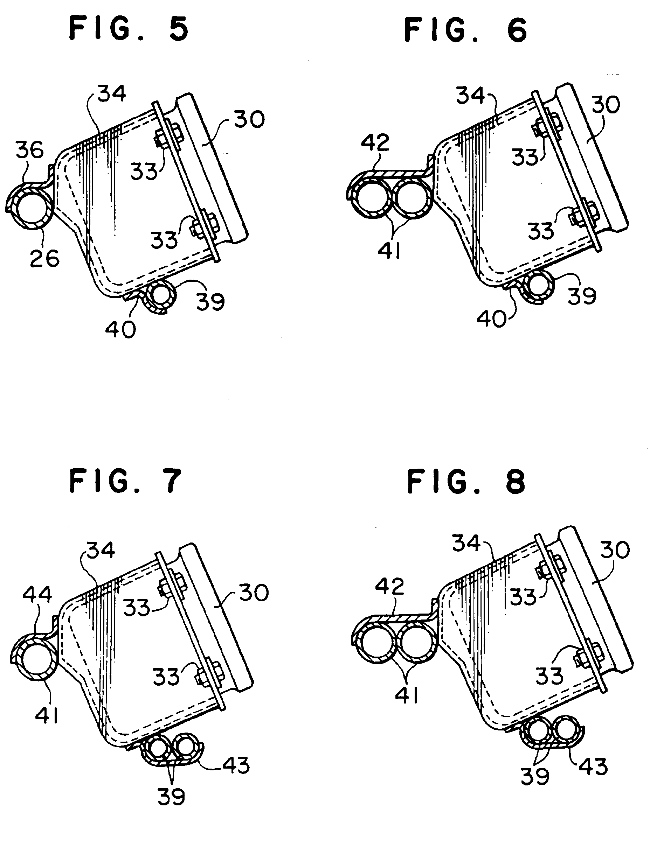

In the illustrated embodiment, an auxiliary support member 39 of a pipe like configuration is disposed downward and in parallel with the steering support member 26. The support member 39 is supported by the hinge pillar 11 at one end and by an extension formed on the reinforcement 29 at the other end. As shown in Figure 4 and Figure 5, the case 34 for the air bag unit 30 is joined with the steering support member 26 at an upper portion of the external bottom surface through the brackets 36 and with the auxiliary support member 39 at a lower portion of a lower surface of the case 34 through brackets 40. Thus, the case 34 or the air bag unit 30 is carried by a plurality of the support members 26 and 39 so that a stability of the mount structure for the air bag unit 30 can be improved.

Referring to Figure 6, there is shown a still another embodiment of the present invention.

A pair of main support members 41, 41 are provided instead of the steering support member 26 for supporting the upper portion of the external bottom surface of the case 34 through brackets 42.

In another modification of the present invention, a pair of auxiliary support members 39, 39 are employed for supporting the lower portion of the external lower surface of the case 34 through brackets 43 instead of the single support members shown in Figure 6.

The case 34 may be carried by the pair of the main support members 41, 41 and the pair of the auxiliary support members 39, 39 as shown in Figure 8.

End portion of the auxiliary support member 39 may be connected any of the floor panel 28, hinge pillar and reinforcement 29.

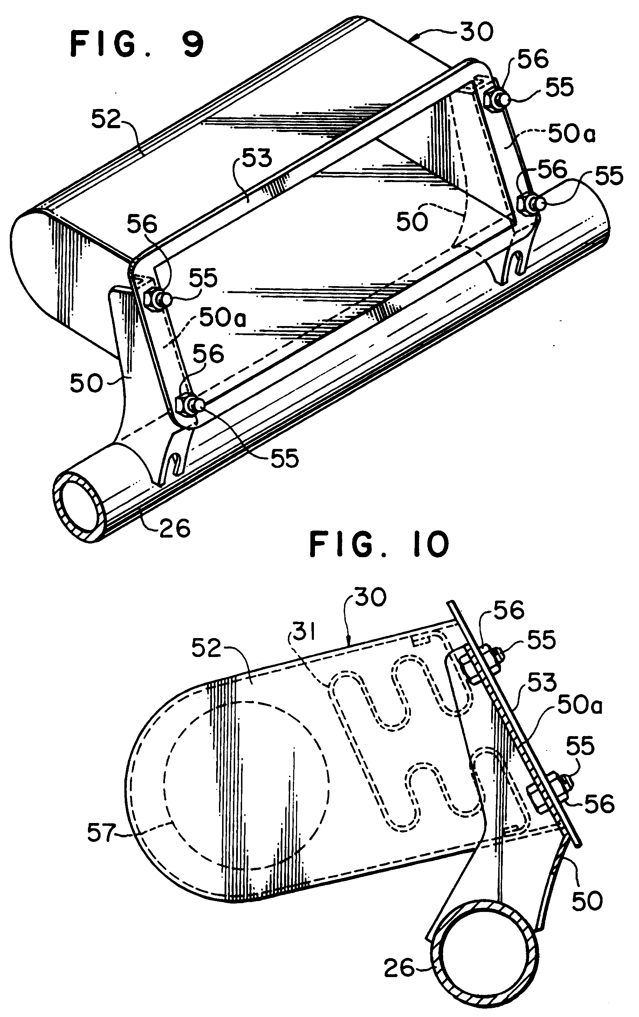

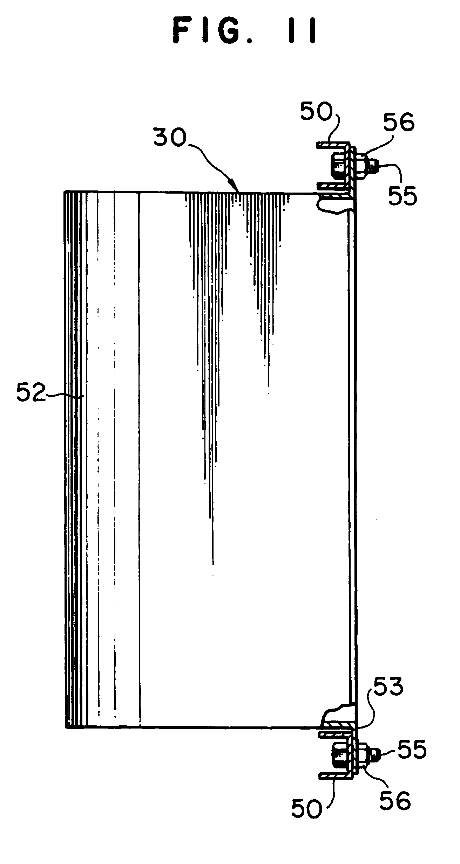

Referring to Figures 9-12, there is shown a further embodiment of the present invention.

A pair of a channel section brackets 50, 50 are welded onto the steering support member 26 in a transversely spaced relationship with each other. The bracket 50 is provided with an engaging surface 50a on which a case 52 for an air bag unit 30 is mounted through an annual flange 53 thereof. In mounting the case on the bracket, the case 52 is set on the brackets 50. Bolts 55, 55 are inserted into holes 54 on the engaging surface 50a and fixed by nuts 56, 56 together with the flange 53 to the brackets 50, 50.

The air bag unit 30 is provided with the air bag 31, inflator 57.

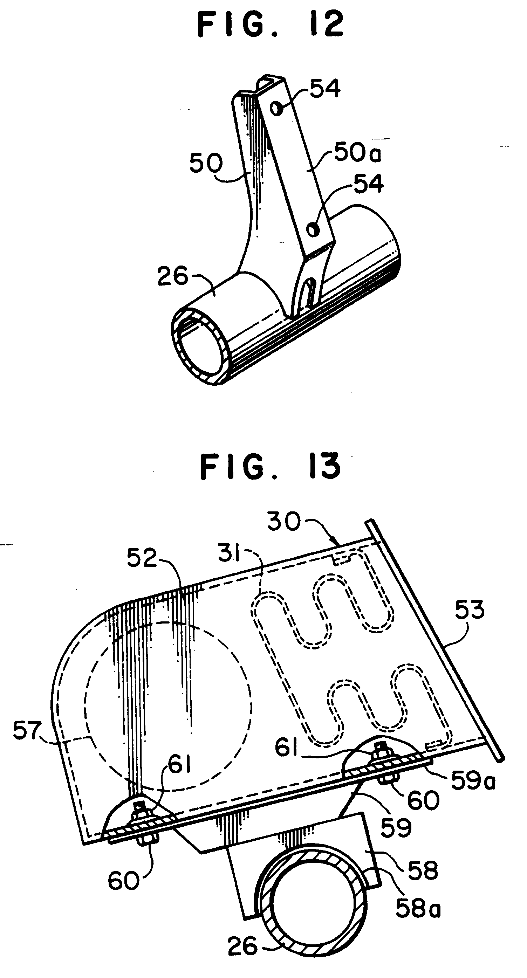

Referring to Figure 13, there is shown a still another embodiment of the present invention.

The illustrated air bag mount structure is provided with a lower bracket 58 with a round flange 58a and an upper bracket 59 with a flat flange 59a for mounting the air bag unit 30 thereon. The lower and upper brackets 58 and 59 are engaged with each other. The round flange 58 is of a complementary configuration against an external surface of the steering support member 26. The bracket 58 is fixed to the steering support member 26 at the flange 58a by welding. The case 52 is secured to the flange 59a of the upper bracket 59 through bolts 60 and nuts 61.

The case 52 with the air bag unit 30 can be easily removed by disengaging the bolts 60 and nuts 61 through the glove box for inspection or maintenance service.

## Claims

1. An air bag mount structure for mounting an air bag unit (30) having an air bag (31), an igniter and an inflator and which is disposed behind an instrument panel (15) for absorbing a shock against a passenger seated in a front seat of a vehicle, the structure comprising a hinge pillar (11) arranged in a front body structure of the vehicle on opposite sides of the front body structure for supporting a respective door unit through a hinge device, a support (26) extending in a transverse direction of the vehicle, connected at each end to a respective hinge pillar (11), and for mounting the air bag unit thereon; characterised in that the air bag is mounted on the support (26) so that the air bag unit is not fixed with respect to either a dash panel (1, 2) or a cowl panel (3, 4); and by a reinforcement structure (29) connected to a floor panel at one end and which supports the support at its other end.

2. A structure according to claim 1,wherein the support (26) is of a pipe-like configuration extending transversely.

3. A structure according to claim 1 or claim 2, wherein the reinforcement structure (29) is mounted on a tunnel structure (28) of the floor panel.

4. A structure according to any one of the preceding claims, wherein a knee protector (22) is downwardly disposed adjacent to the support.

5. A structure according to claim 4, wherein the air bag unit (30) is disposed in a space defined by the instrument panel (23) and above a hypothetical locus of the knee protector (22) in case of collision.

6. A structure according to any one of the preceding claims, further comprising a mount case (34) for receiving the air bag unit therein, the mount case being secured to the support (26) at a lower portion so that the air bag unit (30) is positioned slightly upwardly for causing the air bag (31) to be inflated toward an upper portion of the passenger.

7. A structure according to claim 6, further comprising an auxiliary support member (39) extending transversely in parallel with the support (26) below the support so as to support the mount case (34).

8. A structure according to claim 7, wherein the auxiliary member (39) is supported by the hinge pillar (11) at one end and by an extension (29a) formed on the reinforcement structure (29) at the other end.

9. A structure according to claim 7 or claim 8, wherein the mount case (34) is joined with the support (26) at an upper end portion of the external bottom surface and with the auxiliary member (39) at a lower portion of a lower surface.

10. A structure according to any one of claims 7 to 9, wherein the support (26) comprises a plurality of members (41) for supporting the external upper portion of the mount case, and the auxiliary member comprises a plurality of members (39) for supporting an external lower portion of the mount case.

11. A structure according to any one of the preceding claims, further comprising a pair of brackets (50) welded onto the support (26) in a transversely spaced relationship with each other for mounting the air bag (30) thereon.

12. A structure according to claim 11, when dependent on claim 6, wherein the brackets are provided with an engaging surface on which the mount case (34) is mounted.

13. A structure according to any one of claims 1 to 10, further comprising a lower bracket (58) with a round flange (58a) which is connected to the support (26) and an upper bracket (59) with a flat flange (59a) for mounting the air bag unit (30), the lower and upper brackets being engaged with each other.

## Patentansprüche

1. Airbag-Befestigungsstruktur zur Befestigung einer Airbag-Einheit (30) mit einem Airbag (31), einer Zündeinrichtung und einer Aufbläheinrichtung und welche hinter einem Armaturenbrett (15) zur Absorbierung eines gegen einen Fahrzeuginsassen, der in einem Vordersitz eines Fahrzeugs sitzt, gerichteten Stosses angeordnet ist, wobei die Struktur aufweist eine Schwenksäule 11, die in einer vorderen Karosseriestruktur des Fahrzeugs auf gegenüberliegenden Seiten der vorderen Karosseriestruktur zur Abstützung jeweils einer Türeinheit mittels einer Schwenkvorrichtung angeordnet ist, einen Träger (26), der sich in Querrichtung des Fahrzeuges erstreckt, der an jedem Ende mit einer Schwenksäule (11) verbunden ist und zur Befestigung der Airbag-Einheit darauf dient;
**dadurch gekennzeichnet**, daß der Airbag an dem Träger (26) angebracht ist, so daß die Airbag-Einheit nicht fixiert ist in bezug zu einem Spritzwandblech (1, 2) oder einem Belüftungskanalblech (3, 4), und
gekennzeichnet durch
eine Verstärkungsstruktur (29), die an einem Ende mit einem Bodenblech verbunden ist, und die den Träger an ihrem anderen Ende abstützt.

2. Struktur nach Anspruch 1, bei der der Träger (26) von einer rohrförmigen Konfiguration ist, die sich quer erstreckt.

3. Struktur nach Anspruch 1 oder 2, bei der die Verstärkungsstruktur (29) auf einer Tunnelstruktur (28) des Bodenblechs befestigt ist.

4. Struktur nach einem der vorhergehenden Ansprüche, bei der eine Knieschutzvorrichtung (22) unterhalb benachbart dem Träger angeordnet ist.

5. Struktur nach Anspruch 4, bei der die Airbag-Einheit (30) in einem Raum angeordnet ist, der durch das Armaturenbrett (23) und oberhalb eines im Kollisionsfall hypothetischen Ortes der Knieschutzvorrichtung (22) definiert ist.

6. Struktur nach einem der vorhergehenden Ansprüche, weiterhin aufweisend ein Befestigungsgehäuse (34) zur Aufnahme der Airbag-Einheit darin, wobei das Befestigungsgehäuse in einem unteren Bereich am Träger (26) befestigt ist, derart, daß die Airbag-Einheit (30) leicht nach oben gerichtet positioniert ist, damit der Airbag (31) in Richtung auf einen oberen Bereich des Fahrzeuginsassen hin aufgebläht wird.

7. Struktur nach Anspruch 6, weiterhin aufweisend ein Hilfstragteil (39), das sich quer und parallel zum Träger (26) unterhalb des Trägers erstreckt, um das Befestigungsgehäuse (34) abzustützen.

8. Struktur nach Anspruch 7, bei der das Hilfsteil (39) an einem Ende von der Schwenksäule (11) und am anderen Ende von einem Ausleger (29a) abgestützt wird, der an der Verstärkungsstruktur (29) ausgebildet ist.

9. Struktur nach Anspruch 7 oder 8, bei der das Befestigungsgehäuse (34) mit dem Träger (26) in einem oberen Endbereich der äußeren Bodenoberfläche und mit dem Hilfsteil (39) in einem unteren Bereich einer unteren Oberfläche verbunden ist.

10. Struktur nach einem der Ansprüche 7 bis 9, bei der der Träger (26) eine Vielzahl von Elementen (41) zu Abstützung des äußeren oberen Bereichs des Befestigungsgehäuses, und das Hilfselement eine Vielzahl von Elementen (39) zur Abstützung eines äußeren unteren Bereichs des Befestigungsgehäuses aufweist.

11. Struktur nach einen der vorhergehenden Ansprüche, weiterhin aufweisend ein Paar von Tragarmen (50), die auf den Träger (26) quer zueinander beabstandet zur Befestigung des Airbags (30) darauf aufgeschweißt sind.

12. Struktur nach Anspruch 11, mit Rückbezug auf Anspruch 6, bei der die Tragarme mit einer Eingriffsoberfläche versehen sind, auf der das Befestigungsgehäuse (34) befestigt ist.

13. Struktur nach einem der Ansprüche 1 bis 10, weiterhin aufweisend einen unteren Tragarm (58) mit einem abgerundeten Flansch (58a), der mit dem Träger (26) verbunden ist, und einen oberen Tragarm (59) mit einem ebenen Flansch (59a) zur Befestigung der Airbag-Einheit (30), wobei der untere Tragarm und der obere Tragarm miteinander im Eingriff sind.

## Revendications

1. Structure de montage pour airbag, destinée au montage d'une unité d'airbag (30); comportant un airbag (31), un allumeur et un gonfleur, et qui est disposée à l'arrière d'un tableau à instruments (15) afin d'absorber un choc contre un passager assis dans un siège à l'avant d'un véhicule, la structure comprenant un montant à charnières (11) disposé dans une structure de carrosserie avant du véhicule sur les côtés opposés de la structure de carrosserie avant, pour supporter une porte respective au moyen d'un dispositif à charnières, un support (26) s'étendant dans une direction transversale du véhicule, raccordé à chaque extrémité à un montant à charnières respectif (11) et destiné au montage de l'unité d'airbag sur ledit support; caractérisée en ce que l'airbag est monté sur le support (26) de façon que l'unité d'airbag ne soit pas fixée par rapport à un panneau de tableau de bord (1, 2) ou à un panneau de tablier (3, 4); et par une structure de renfort (29) reliée à un panneau de plancher à une extrémité et, qui supporte le support à son autre extrémité.

2. Structure selon la revendication 1, caractérisée en ce que le support (26) a une configuration analogue à un tube qui s'étend transversalement.

3. Structure selon l'une ou l'autre des revendications 1 et 2 caractérisée en ce que la structure de renfort (29) est montée sur une structure en tunnel (28) du panneau de plancher.

4. Structure selon l'une quelconque des revendications précédentes, dans laquelle un protecteur de genoux (22) est disposé vers le bas et adjacent au support.

5. Structure selon la revendication 4, dans laquelle l'unité d'air bag (30) est disposée dans un espace défini par le tableau à instruments (23) et au-dessus d'un lieu hypothétique du protecteur de genoux (22) en cas de collision.

6. Structure selon l'une quelconque des revendications précédentes, comprenant en outre une boîte de montage (34) destinée à recevoir l'unité d'air bag à l'intérieur, la boîte de montage étant fixée au support (26) à une partie inférieure, de sorte que l'unité d'air bag (30) est placée légèrement en direction du haut pour amener l'air bag (31) à se gonfler en direction d'une partie supérieure du passager.

7. Structure selon la revendication 6, comprenant en outre un organe de support auxiliaire (39) s'étendant transversalement et parallèlement au support (26) en dessous du support, de manière à supporter la boîte de montage (34).

8. Structure selon la revendication 7, dans laquelle l'organe auxiliaire (39) est supporté par le montant à charnières (11) à une extrémité, et par une extension (29a) formée sur la structure de renfort (29) à l'autre extrémité.

9. Structure selon l'une ou l'autre des revendications 7 et 8, dans laquelle la boîte de montage (34) est raccordée au support (26) à une partie d'extrémité supérieure de la surface de fond extérieure et à l'organe auxiliaire (39) à une partie inférieure d'une surface inférieure.

10. Structure selon l'une quelconque des revendications 7 à 9, dans laquelle le support (26) comprend une pluralité d'éléments (41) pour supporter la partie supérieure externe de la boîte de montage, et en ce que l'organe auxiliaire comprend une pluralité d'éléments (39) pour supporter une partie inférieure externe de la boîte de montage.

11. Structure selon l'une quelconque des revendications précédentes comprenant en outre une paire de platines (50) soudée sur le support (26) dans une relation d'écartement transversal l'une par rapport à l'autre pour monter l'air bag (30) sur ledit support.

12. Structure selon la revendication 11 prise en dépendance de la revendication 6, dans laquelle les platines sont munies d'une surface d'engagement sur laquelle est montée la boîte de montage

13. Structure selon l'une quelconque des revendications 1 à 10, comprenant en outre une platine inférieure (58) avec une bride ronde (58a) qui est reliée au support (26), et une platine supérieure (59) avec une bride plate (59a) pour monter l'unité d'air bag (30), les platines inférieure et supérieure étant en engagement l'une avec l'autre.
